# EUROPÄISCHE PATENTSCHRIFT

(11) **EP 0 532 532 B1**
(45) Veröffentlichungstag und Bekanntmachung des Hinweises auf die Patenterteilung: **21.09.1994**
(21) Anmeldenummer: 91909542.2
(22) Anmeldetag: 22.05.1991
(51) Int. Cl.: B23B 51/04

(54) **BOHRWERKZEUG**
DRILLING TOOL
Outil de perçage

(30) Priorität: 06.06.1990 DE 4018043
(43) Veröffentlichungstag der Anmeldung: 24.03.1993
(73) Patentinhaber: Krupp Widia GmbH, 45145 Essen (DE)
(72) Erfinder: VON HAAS, Rainer, D-2054 Geesthacht (DE); WEGENER, Manfred, D-4300 Essen 1 (DE)
(74) Vertreter: Vomberg, Friedhelm, Dipl.-Phys.
(86) Internationale Anmeldenummer: DE9100425
(87) Internationale Veröffentlichungsnummer: WO9118700

(56) Entgegenhaltungen:
- EP-A- 0 088 505
- EP-A- 0 181 844
- FR-A- 2 143 174
- GB-A- 2 016 316
- GB-A- 2 184 373
- US-A- 4 252 480
- Patent Abstracts of Japan, Band 9, Nr. 252 (M-420)(1975), ) Oktober 1985, & JP-A-60 104 604 (FUJIKOSHI) 10 Juni 1985

## Beschreibung

Die Erfindung betrifft ein Bohrwerkzeug nach dem Oberbegriff der Ansprüche 1 und 2.

Aus der EP 0 181 844 A3 ist ein Bohrwerkzeug für Bohrungen in Metallvollmaterial bekannt, das einen Schaft und mehrere an der Stirnseite des Schaftes in verschiedenem radialen Abstand gegeneinander versetzt angeordnete geometrisch gleiche Wendeschneidplatten aufweist, deren Arbeitsbereiche sich überdecken und von denen jede zwei gleich lange Schneidkanten aufweist, die benachbart und in stumpfem Winkel zueinander geneigt sind und die gleichzeitig in Eingriff stehen, wobei die radial innere Wendeschneidplatte mit ihrer einen in Eingriff stehenden Schneidkante die Bohrerachse geringfügig überschreitet. Eine der Winkelhalbierenden der beiden Schneidkanten einer Wendeschneidplatte ist gegen die Schaftlängsachse um 2 bis 3° geneigt und die andere im wesentlichen parallel zur Schaftlängsachse angeordnet.

Nach dem Stand der Technik ist es bekannt, daß es je nach Anordnung der Wendeschneidplatten infolge unsymmetrischer Schnittkraftverhältnisse zu einer ungünstigen radialen Krafteinwirkung auf den Bohrerschaft kommt, was ein Ver-laufen der Bohrung bewirken kann. Daher wird vielfach mit einer oder mehreren am Bohrerschaft angebrachten Stützleisten gearbeitet, die das Bohrwerkzeug an der Bohrwandung abstützen. Nachteiligerweise unterliegen die Stützleisten einem sehr großen Verschleiß und können auch nicht verhindern, daß die Maschinenlager des Bohrwerkzeuges stark beansprucht werden; zudem ist die Oberflächengüte der Bohrung vielfach mangelhaft.

In der DE 27 30 418 C2 wird daher ein Bohrwerkzeug vorgeschlagen, bei dem die Winkelhalbierende der in Schneideingriff stehenden Schneidkanten jeder Wendeschneidplatte parallel zur Bohrerachse angeordnet ist. Als Schneideinsätze werden vorzugsweise Wendeschneidplatten eingesetzt, bei denen jeweils an jeder zweiten Schneidecke die benachbarten Schneidkanten einen Winkel von 156° miteinander einschließen. Ein Kraftausgleich des Bohrerschaftes in radialer Richtung, den dieses Bohrwerkzeug bewirken soll, ist jedoch nur dann möglich, wenn jeweils beide in Eingriff stehenden Schneidkanten im wesentlichen über ihre volle Länge in Eingriff stehen, mit anderen Worten: Die Arbeitsbereiche dürfen sich wenn überhaupt nur geringfügig überlappen. Diese Ausführung hat den Nachteil, daß bei Änderung des Bohrungsdurchmessers ein neuer Satz von Schneideinsätzen verwendet werden muß.

In der EP 0 054 913 B1 wird zur Beseitigung dieses Nachteils vorgeschlagen, daß die Aufnahmen für die einzelnen Wendeschneidplatten derart angebracht sind, daß sich die radialen Schnittkraftkomponenten der im Eingriff stehenden Schneidkanten für jede einzelne Wendeschneidplatte ausgleichen, in dem die Winkelhalbierenden dieser Schneidkanten gegen die parallelen zur Bohrerachse um einen Winkel geneigt werden, der von der wirksamen Länge der längs eines Teilabschnitts in Eingriff stehenden Schneidkante abhängig ist.

Zum Ausgleich der Radialkräfte ist in der DE 27 51 255 C2 auch vorgeschlagen worden, die Radialebene des inneren Schneideinsatzes zum Ausgleich der auf den Bohrerschaft einwirkenden radialen Kräfte entgegen der Drehrichtung des Bohrers um einen bestimmten Winkel gegen den am Umfang angeordneten Schneideinsatz nach rückwärts abzuwinkeln. Hierdurch werden die Kräfte jedoch lediglich parallel gerichtet, aber nicht ausgeglichen, da der Versatzwinkel keinen Einfluß auf die Größe der Radial- und der Schnittkräfte haben kann. Somit bleiben die Kräfte als Funktion der Schnittbedingungen erhalten und sind unabhängig von der Werkzeuggeometrie.

Schließlich ist insbesondere für Bohrungen in platten Stapeln, aber auch in einstückigem Metallvollmaterial in der DE 38 02 290 C1 beschrieben worden, auf einem Durchmesser jenseits der durch die Bohrerachse gekennzeichneten Hälfte eine erste Wendeschneidplatte radial außen anzuordnen und auf der gegenüberliegenden Seite zwei kleinere Wendeschneidplatten, wobei die wirksame äußere Schneidkante der radial außen angeordneten Wendeschneidplatte annähernd auf dem gleichen Arbeitskonus und auf dem gleichen Maximalradius verläuft, wie die radial äußere Schneidkante der größten Wendeschneidplatte. Auch mit dieser Anordnung soll lediglich ein radialer Schnittkraftausgleich erzielt werden.

Es ist Aufgabe der vorliegenden Erfindung, das eingangs genannte Bohrwerkzeug dahingehend weiterzuentwickeln, daß alle über die radialen Kraftkomponenten hinausgehenden Einflüsse beim Bohren mit dem Ziel berücksichtigt werden, einen möglichst großen Bereich an abgestuften Bohrdurchmessern mit möglichst wenigen Wendeschneidplattensätzen abzudecken, wobei Riefen in den Bohrlöchern vermieden werden.

Diese Aufgabe wird durch ein Bohrwerkzeug mit den in Anspruch 1 oder 2 aufgezeigten Merkmalen gelöst. Im Unterschied zu den nach dem Stand der Technik bekannten eingangs aufgezeigten Bohrwerkzeugen wird bewußt eine Wendeschneidplattenanordnung gewählt, bei der die Summe der aus allen in Eingriff stehenden wirksamen Schneidkanten resultierenden Radialkraftkomponente von Null verschieden ist. Die verbleibende Restradialkraftkomponente bildet erfindungsgemäß mit der Summe aller Horizontalkraftkomponenten eine auf die Schneidkante wirkende Gesamtresultierende, die in Richtung der radial äußersten Wendeschneidplatte oder einem hiervon um maximal 45° verschiedenen Winkel gerichtet ist, wodurch Bohrlöcher geschnitten werden können, deren Durchmesser geringfügig größer als der Bohrerdurchmesser ist. Hierdurch entsteht der Vorteil, daß die Bohrwerkzeuge nicht in den Bohrungen klemmen können, und beim Herausziehen des Bohrerschaftes keine Rückzugsriefen entstehen können. Hierbei hängt der Neigungswinkel mindestens der äußeren Wendeschneidplatte gegenüber der Schaftlängsachse zum einen von dem Dachwinkel bzw. den Dachwinkeln ab, den bzw. die die wirksamen Schneidkanten einer jeden Wendeschneidplatte miteinander bilden, ferner vom Überlappungsgrad der Arbeitsbereiche der eingesetzten Wendeschneidplatten sowie den Bohrdurchmesser als auch schließlich von der Relation der Neigungswinkel der Winkelhalbierenden der eingesetzten Wendeschneidplatten zueinander. Erfahrungen haben gezeigt, daß bei gleichem Dachwinkel der eingesetzten Wendeschneidplatten und fest vorgegebenem Neigungswinkel der inneren Wendeschneidplatte, der auch Null sein kann, der Neigungswinkel der radial äußeren Wendeschneidplatte mit geringer werdendem Bohrdurchmesser größer gewählt werden muß. Entsprechendes gilt auch, wenn Wendeschneidplatten mit größerem Dachwinkel eingesetzt werden. Bei gleichem Dachwinkel der Wendeschneidplatten und ein und demselben Bohrdurchmesser erniedrigt sich der Neigungswinkel der inneren Wendeschneidplatte bei größer gewähltem Neigungswinkel der radial äußeren Wendeschneidplatte.

Während nach der vorbehandelten ersten Lösungsmöglichkeit jeweils geometrisch ähnliche Wendeschneidplatten mit jeweils zwei gleichlangen Schneidkanten verwendet worden sind, bei denen jeweils zwei benachbarte Schneidkanten einen stumpfen Dachwinkel zueinander bilden, wird nach einer zweiten Lösungsmöglichkeit vorgeschlagen, mindestens eine Wendeschneidplatte zu verwenden, die eine Trochoiden-Schneidkante aufweist. Für die Einbaulage dieser Trochoiden-Wendeschneidplatte gilt hinsichtlich der Symmetriemittelachse dieser Wendeschneidplatte das gleiche wie für die vorbehandelte Winkelhalbierende des Dachwinkels einer Wendeschneidplatte mit zwei gleichlangen Schneiden.

Weiterbildungen der im Anspruch 1 und Anspruch 2 aufgezeigten Lösungen werden in den Unteransprüchen 3 bis 8 beschrieben.

Die Dachwinkel der gleichlangen Schneidkanten der verwendeten Wendeschneidplatten sollen zwischen 115° und 160° gewählt werden, vorzugsweise bei 160°, 156°, 145° 125° oder 115° liegen. Je nach Dachwinkel werden Neigungswinkel der Winkelhalbierenden zu der Schaftlängsachse dergestalt gewählt, daß bei einem Dachwinkel von 160° der Neigungswinkel der inneren bzw. der äußeren Wendeschneidplatte maximal 8° betragen soll. Bei kleinerem Dachwinkel, z.B. 115°, kann der bzw. können die Neigungswinkel bis maximal 25° gewählt werden (Anspruch 7).

Nach einer weiteren Ausgestaltung der Erfindung ist die Winkelhalbierende oder die Symmetrieachse der Schneidkante(n) der inneren Wendeschneidplatte um einen kleineren Winkel gegen die Schaftlängsachse geneigt als der betreffende Winkel der äußeren Wendeschneidplatte. Hiermit ist bei sich deutlich überlappenden Bereichen der Wendeschneidplatten insbesondere der Fall angesprochen, daß der Neigungswinkel der inneren Wendeschneidplatte Null beträgt und der Neigungswinkel der äußeren Wendeschneidplatte zwischen 3 und 5° liegt. Bei insgesamt zwei an der Stirnseite des Schaftes angeordneten Wendeschneidplatten wird weiterhin vorzugsweise bei der inneren Wendeschneidplatte die zwei gleichlange Schneidkanten aufweist und die radial äußere Wendeschneidplatte eine Trochoiden-Schneidkante verwendet. Der Neigungswinkel der Symmetrieachse der Trochoiden-Schneidkante kann maximal 20° betragen und ist vorzugsweise jeweils größer als der Neigungswinkel der Winkelhalbierenden der inneren Wendeschneidplatte.

Schließlich kann das Bohrwerkzeug auch derart ausgestaltet sein, daß die Wendeschneidplatten unterschiedlich groß sind bzw. unterschiedlich lange Schneidkanten von Wendeschneidplatte zu Wendeschneidplatte gesehen, aufweisen.

Vorzugsweise wird die wirksame (in Eingriff stehende) Schneidkantenlänge der radial äußersten Wendeschneidplatte um 8 % bis 15 % größer als die wirksame Schneidkantenlänge der radial innersten Wendeschneidplatte ist. Insbesondere wird hierbei auch der Fall angesprochen, bei dem auf einer Bohrerhälfte mehr als eine Wendeschneidplatte angeordnet ist und wobei die wirksame Schneidkantenlänge der Wenderschneidplatten von der innersten zur äußersten Wendeschneidplatte zunimmt.

Nach einer weiteren Ausgestaltung der Erfindung kann die Überdeckung der Arbeitsbereiche der Schneidkanten auch dadurch eingestellt werden, daß die radial innere Wendeschneidplatte bis maximal 0,15 mm von der oder den übrigen Wendeschneidplatte(n) vorsteht. Hierdurch ergibt sich beim Anbohren eine gute Zentrierung des Werkzeuges.

Ausführungsbeispiele der Erfindung sind in den Zeichnungen dargestellt. Es zeigen:
- Fig. 1a: eine Seitenansicht des erfindungsgemäßen Bohrwerkzeuges,
- Fig. 1b: eine Stirnansicht des Bohrwerkzeuges nach Fig. 1a,
- Fig. 2a bis e: verschiedene Wendeschneidplatten, die in das Bohrwerkzeug einsetzbar sind,
- Fig. 3a, b bis 6a, b: jeweils unterschiedliche Ausführungsformen des Bohrwerkzeuges gemäß Fig. 1.

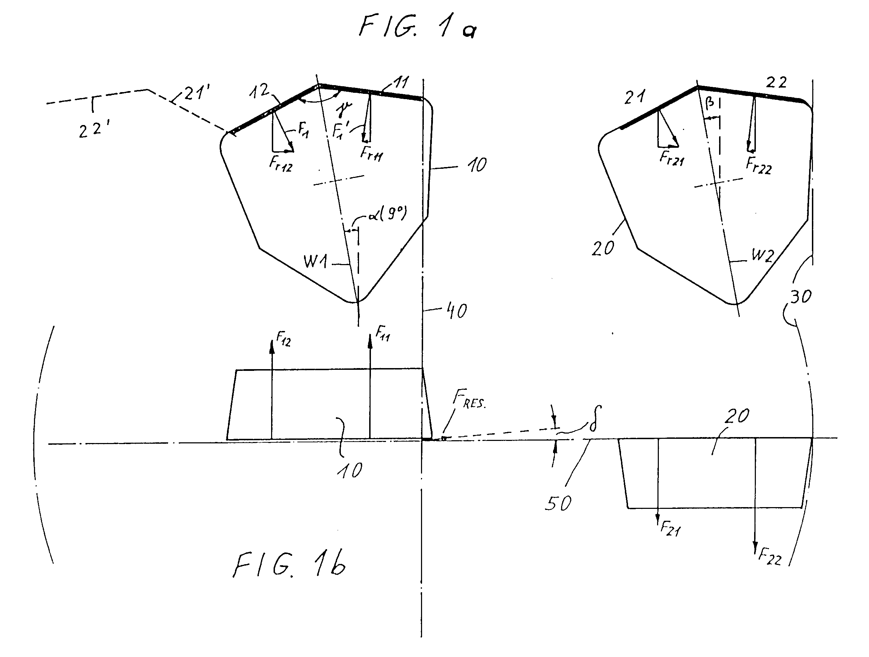

In Fig. 1a und b ist ein erfindungsgemäßes Bohrwerkzeug dargestellt, an dessen Schaftstirnseite zwei Wendeschneidplatten um 180° versetzt angeordnet sind. Die sechseckigen Wendeschneidplatten schließen einen Dachwinkel γ von 145° miteinander ein. Jede dieser Wendeschneidplatten besitzt Schneidkanten 11, 12, 21 und 22, wobei sich jedoch die Schneidbahnen der radial äußeren Schneidkante 12 und die der radial inneren Schneidkante 21 überlappen. Die radial äußere Wendeschneidplatte 20 bestimmt den Bohrdurchmesser, der durch die Bohrwand 30 verdeutlicht ist. Die radial innere Wendeschneidplatte ist derart angeordnet, daß deren radial innere Schneidkante 11 geringfügig über die Bohrerachse bzw. Schaftlängsachse 40 hinausragt. In den Ausführungsbeispielen nach Fig. 1 sind beide Wendeschneidplatten mit einem jeweiligen Dachwinkel γ von 145° um einen Winkel α bzw.β von 9 bzw. 10° gegen die Schaftlängsachse 40 geneigt. Beim Einsatz des Bohrwerkzeuges treten an jeder Schneidkante Kräfte auf, die im wesentlichen senkrecht zu den Schneidkanten angenommen werden können. Diese Schnittkräfte sind am Beispiel der Wendeschneidplatte 10 mit F₁ und F₁, angenommen und können in eine Vertikalkomponente parallel zur Schaftlängsachse 40 und einer Radialkomponente Fᵣ₁₂ und Fᵣ₁₁ zerlegt werden. Entsprechendes ergibt sich aus einer diesbezüglichen Betrachtung an der radial äußeren Wendeschneidplatte 20. Neben den senkrecht zu den Schneidkanten wirkenden Kräften treten jedoch noch Horizontalkräfte auf, die Fig. 1b mit F₁₂, F₁₁, F₂₁ und F₂₂ entnommen werden können. Während die auf die Schneidkanten 11 und 12 der radial inneren Wendeschneidplatte wirkenden Horizontalschnittkräfte etwa gleich groß sind und etwa der Horizontalschnittkraft F₂₂ entsprechen, die auf die Schneidkante 22 wirkt, ist die entsprechende Horizontalschneidkraft F₂₁ wegen der deutlich kürzeren wirksamen Schneidkantenlänge 21 etwas geringer. Nach dem Erfindungsgedanken werden die Neigungen der Winkelhalbierenden W1 und W2 der beiden Wendeschneidplatten 10 und 20 so gewählt, daß die Summe aller Radialkräfte Fᵣ₁₁, Fᵣ₁₂, Fᵣ₂₁ und Fᵣ₂₂ von Null verschieden ist. Es verbleibt mithin bezogen auf alle in Eingriff stehenden Schneidkanten eine Restradialkraftkomponente, die mit allen Horizontalkraftkomponenten eine resultierende Restgesamtkraft F_{RES} ergibt, die von Null verschieden ist und den Bohrer radial in Richtung 50 der Wendeschneidplatte 20 nach außen drängt, wodurch ein geringfügig größerer Bohrdurchmesser als der durch den Radialabstand der Wendeschneidplatte 20 entsprechende Durchmesser ergibt. Hiermit ist gewährleistet, daß der Bohrer beim Vortrieb nicht klemmen kann und auch beim Herausziehen keine Rückzugsriefen verursacht. Der Winkel δ , den die Restgesamtkraft F_{RES} mit der Geraden 50 bildet, beträgt max. +/- 45°.

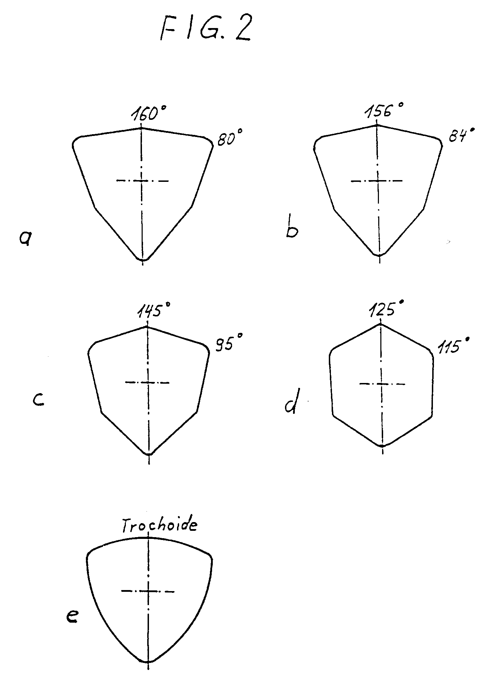

Statt der Wendeschneidplatten 10 und 20 mit einem Dachwinkel γ von 145° können auch andere Wendeschneidplatten einen oder beide Wendeschneidplatten der Ausführungsformen nach Fig. 1 ersetzen. Diesbezügliche einsetzbare Wendeschneidplatten zeigt Fig. 2a bis e mit entsprechenden Dachwinklen von 115°, 125°, 145°, 156° und 160° oder einer Trochoiden-Schneidkante (Fig. 2e).

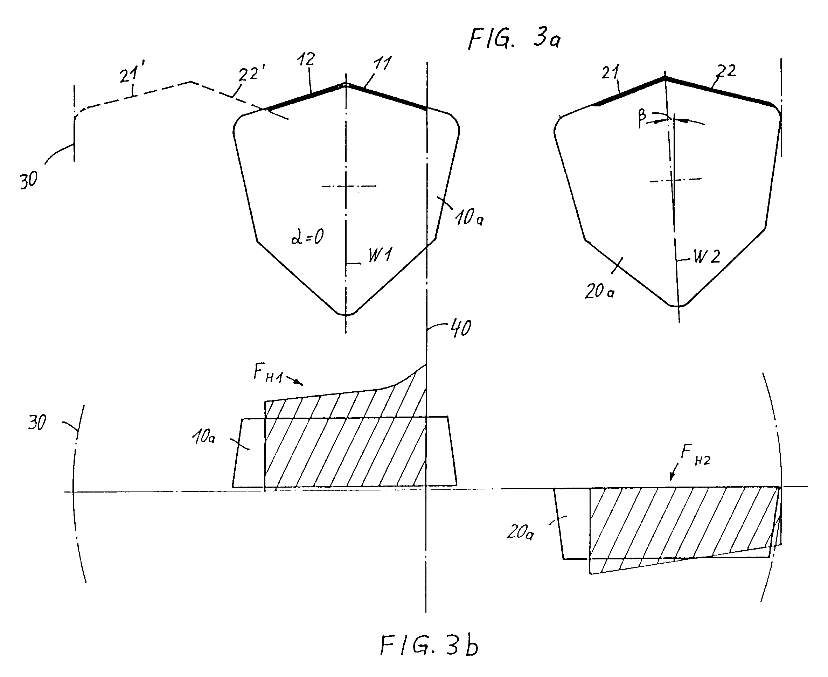

Eine Ausführungsvariante der Anordnung nach Fig. 1 ist in Fig. 3a und b dargestellt. Im Unterschied zur Fig. 1 ist die radial innere Wendeschneidplatte 10a so angeordnet, daß deren Winkelhalbierende W1 parallel zur Schaftlängsachse 40 verläuft. Dazu überragt die Schneidkante 11 die Bohrermitte mit einem weitaus größeren Abschnitt als in Fig. 1a die Wendeschneidplatte 10. Die radial äußere Wendeschneidplatte, die ebenfalls einen Dachwinkel von γ= 145° aufweist, ist um etwa 3° gegen die Schaftlängsachse geneigt. Die beiden Schneidkanten 21 der radial äußeren Wendeschneidplatte 20a sowie die äußere Schneidkante 12 der radial inneren Wendeschneidplatte 10a überlappen sich ebenfalls deutlich, so daß bei keiner der Wendeschneidplatten ein radialer Schnittkraftausgleich erfolgt. Hieraus ergibt sich zusätzlich, daß die Summe der Radialschnittkräfte ebenfalls von Null verschieden ist. Die auftretenden horizontalen Schnittkräfte F_{H1} und F_{H2} sind in Form von schraffierten Flächen dargestellt, wobei sich eine zu Null resultierende horizontale Restkraftkomponente ergibt, so daß die Restradialkraft die in Richtung der Wendeschneidplatte gerichtete Restgesamtkraft FRES bildet.

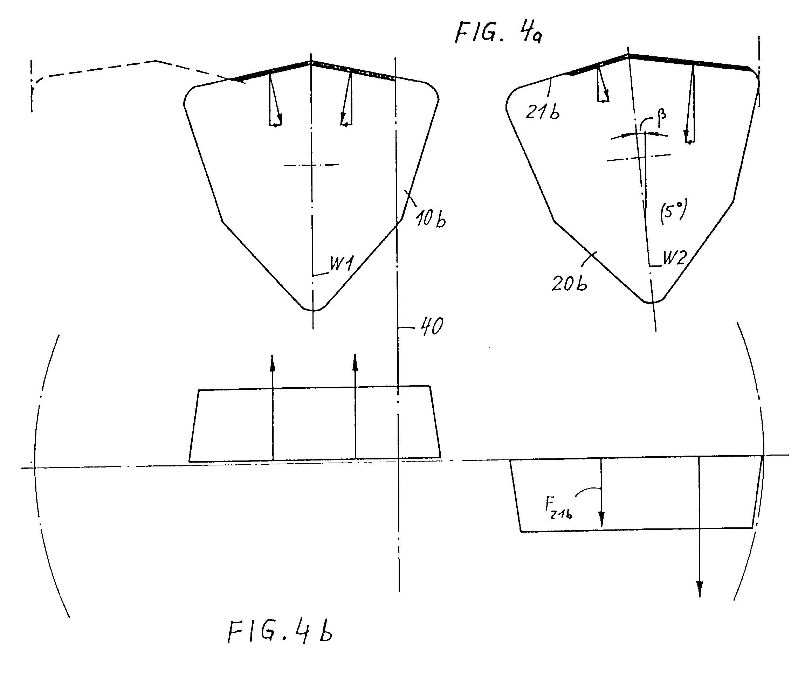

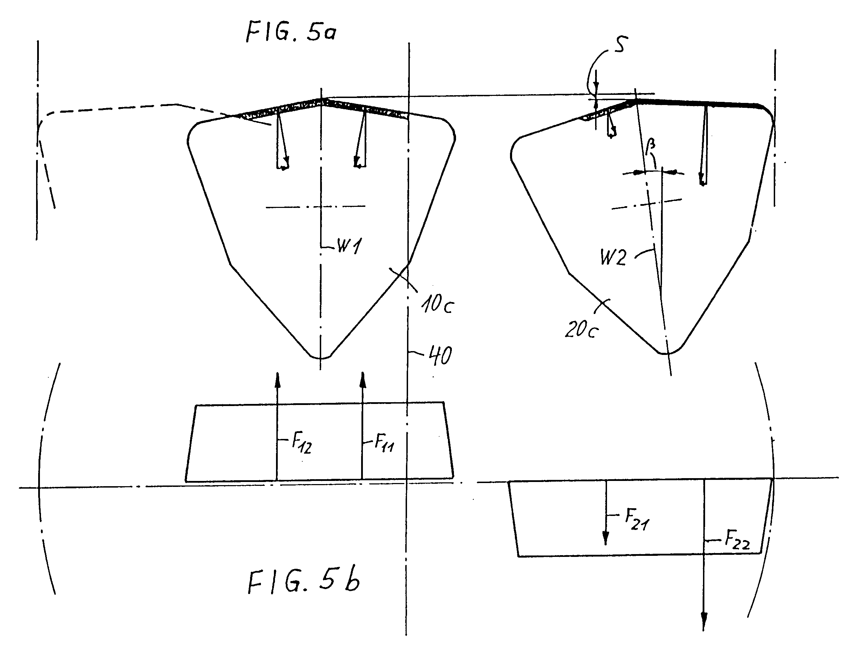

Eine entsprechende Kräftebeziehung wird auch mit der Anordnung nach Fig. 4 erzielt, in der die radial innere Wendeschneidplatte 10b so angeordnet ist, daß ihre Winkelhalbierende W1 parallel zur Schaftlängsachse 40 liegt. Hingegen ist die radial äußere Wendeschneidplatte 20b mit einem Winkel β von 5° gegen die Schaftlängsachse geneigt. Die Schneidbahn der radial äußeren Schneidkante der Wendeschneidplatte 10b überscheidet sich deutlich mit der durch die radial innere Schneidkante der Wendeschneidplatte 20b beschriebenen Schneidbahn. Hierdurch wird die wirksame Schneidkante 21b nahezu bis auf die Hälfte verkürzt. Dementsprechend geringer ist auch die entsprechende horizontale Schnittkraftkomponente F_{21b}. Hierdurch gleichen sich die Horizontalkomponenten aus. Hierdurch bildet sich aus den radialen Kraftkomponenten der Wendeschneidplatte 20b eine gemeinsame Komponente aus. Eine entsprechende Ausführungsvariante wie in Fig. 4 ist in Fig. 5 dargestellt, wobei der Dachwinkel der verwendeten Wendeschneidplatten 10c und 20c jeweils 160° beträgt. Die Winkelhalbierende W1 der radial inneren Wendeschneidplatte 10c läuft parallel zur Schaftlängsachse 40, während die Winkelhalbierende W2 der radial äußeren Wendeschneidplatte um einen Winkel von 9° gegen die Schaftlängsachse geneigt ist.

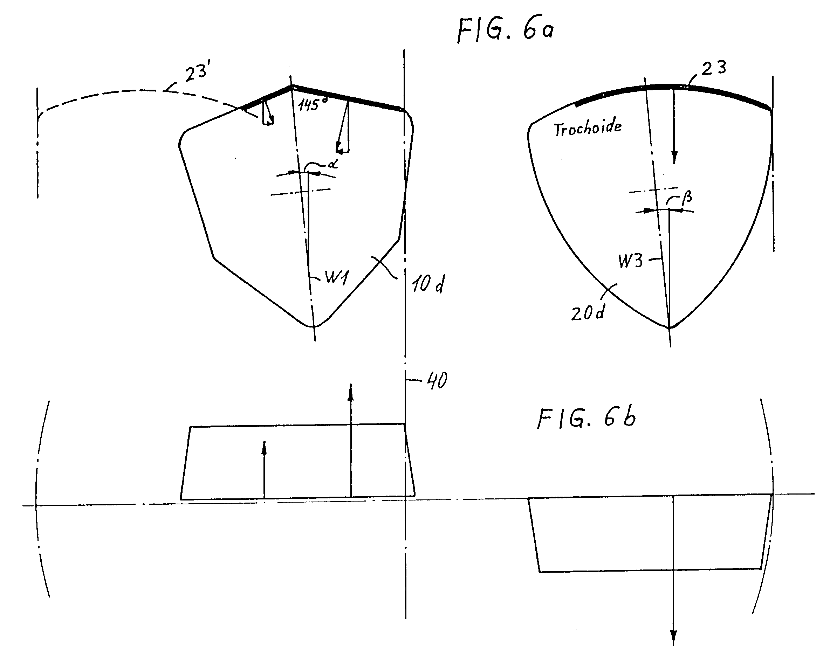

Insgesamt wird aus den Fig. 3, 4 und 5 deutlich, daß bei größer werdendem Dachwinkel der Wendeschneidplatten und gleichbleibendem Winkel α der Neigungswinkel β der radial äußeren Wendeschneidplatte größer werden muß.
In allen vorbehandelten Ausführungsbeispielen sind gleiche Wendeschneidplatten (mit identischem Dachwinkel) eingesetzt worden. Nach der in Fig. 6a dargestellten Ausführungsform kann eine entsprechende Wirkung erzielt werden, wenn als radial äußere Wendeschneidplatte eine Trochoiden-Wendeschneidplatte verwendet wird. Die Trochoiden-Wendeschneidplatte 23 ist derart geneigt, daß ihre Symmetrieachse W3 mit der Schaftlängsachse 40 den Neigungswinkel β von 5° einschließt. Etwa denselben Neigungswinkel α bildet die Winkelhalbierende W1 der radial inneren Wendeschneidplatte 10d, wobei sich die Trochoiden-Schneidkante 23 (siehe gestrichelte Linie 23') hinsichtlich ihrer Schneidbahn deutlich mit der Schneidbahn der radial äußeren Schneidkante der Wendeschneidplatte 10d überschneidet. Auch hier verbleibt eine Restradialkraftkomponente, die mit der horizontalen Restkraftkomponente eine auf die Schneidkanten wirkende Gesamtkraft in Richtung der radial äußeren Wendeschneidplatte bildet.

Selbstverständlich ist es ohne weiteres möglich, statt etwa gleich großer Wendeschneidplatten mit jeweils gleich langen Schneidkanten auch Wendeschneidplatten unterschiedlicher Größe einzusetzen, wobei die relative Schneidenbelastung geringer wird, was sich verschleißmindernd auf die Wendeschneidplatten-schneidkanten auswirkt und die Bruchgefahr der Wendeschneidplatten senkt. Auch hierbei wird eine bewußt starke Überlappung der Schneidkantenbereiche angestrebt, wodurch sich radial gerichtete Restkraftkomponenten bilden, die erfindungsgemäß gleich groß aber im wesentlichen den horizontalen Restkraftschnittkomponenten entgegengesetzt sind. Soweit eine aus Radialkräften und Horizontalkräften verbleibende Gesamtresultierende akzeptiert wird, soll diese jedenfalls in Richtung der Radiallinie einer Wendeschneidplatte verlaufen.

Wie in Fig. 5a angedeutet, steht die radial innere Wendeschneidplatte um ein Maß s vor, daß 0,15 mm nicht überschreitet.

## Patentansprüche

1. Bohrwerkzeug für Bohrungen in Metallvollmaterial, mit einem Schaft und mehreren an der Stirnseite des Schaftes in verschiedenem Radialabstand und um gleiche Umfangswinkel gegeneinander versetzt zueinander angeordnete, geometrisch ähnliche Wendeschneidplatten (10, 20), deren Arbeitsbereiche sich überdecken und von denen jede zwei gleichlange Schneidkanten (11, 12; 21, 22) aufweist, die benachbart und in stumpfem Winkel zueinander geneigt sind und die gleichzeitig in Eingriff stehen, wobei die radial innere Wendeschneidplatte (10) mit ihrer einen in Eingriff stehenden Schneidkante (11) die Bohrerachse (40) geringfügig überschreitet, mindestens eine der Winkelhalbierenden (W1, W2) der beiden Schneidkanten (11, 12; 21, 22) einer Wendeschneidplatte (10, 20) gegen die Schaftlängsachse (40) um einen Winkel (α, β) geneigt ist, wobei der Neigungswinkel einer der Winkelhalbierenden (W1, W2) bis zu 25° beträgt und mindestens eine der Winkelhalbierenden in einem von Null verschiedenen Winkel zu einer anderen Winkelhalbierenden verläuft, **dadurch gekennzeichnet**, daß die von Null verschiedene Summe der aus allen in Eingriff stehenden wirksamen Schneidkanten resultierenden Radialkraftkomponente (Fᵣ) und die entsprechende Summe der Horizontalkraftkomponenten (F_{H}), die vorzugsweise Null ist, eine auf die Schneidkanten wirkende Gesamtresultierende (F_{RES}) ergibt, die in Richtung der radial äußersten Wendeschneidplatte (20) oder einem hiervon um maximal 45° verschiedenen Winkel (δ) gerichtet ist.

2. Bohrwerkzeug für Bohrungen in Metallvollmaterial, mit einem Schaft und mehreren an der Stirnseite des Schaftes in verschiedenem Radialabstand und um gleiche Umfangswinkel gegeneinander versetzt zueinander angeordnete Wendeschneidplatten (10, 20), deren Arbeitsbereiche sich überdecken, wobei die radial innere Wendeschneidplatte (10) mit ihrer einen in Eingriff stehenden Schneidkante (11) die Bohrerachse (40) geringfügig überschreitet, dadurch gekennzeichnet, daß mindestens eine der Wendeschneidplatten eine Trochoiden-Schneidkante (23) aufweist, daß deren Symmetrieachse(n) (W3) und/oder mindestens eine der Winkelhalbierenden (W1, W2) der beiden gleichlangen, in stumpfem Winkel zueinander geneigten Schneidkanten (11, 12; 21, 22) einer Wendeschneidplatte gegen die Schaftlängsachse (40) um einen Winkel (α, β) bis zu 25° geneigt ist, daß mindestens eine der Winkelhalbierenden oder die Symmetrieachse in einem von Null verschiedenen Winkel zu einer anderen Winkelhalbierenden und/oder Symmetrieachse verläuft, so daß die von Null verschiedene Summe der aus allen in Eingriff stehenden wirksamen Schneidkanten resultierende Radialkraftkomponente (Fᵣ) und die entsprechende Summe der Horizontalkraftkomponenten (F_{H}), die vorzugsweise Null ist, eine auf die Schneidkanten wirkende Gesamtresultierende (F_{RES}) ergibt, die in Richtung der radial äußersten Wendeschneidplatte (20) oder einem hiervon um maximal 45° verschiedenen Winkel (δ) gerichtet ist.

3. Bohrwerkzeug nach Anspruch 1 oder 2, dadurch gekennzeichnet, daß der stumpfe Dachwinkel (γ) der gleichlangen Schneidkanten zwischen 115 und 160°, vorzugsweise bei 160°, 156°, 145°, 125° oder 115° liegt.

4. Bohrwerkzeug nach einem der Ansprüche 1 bis 3, dadurch gekennzeichnet, daß die Winkelhalbierende (W1, W2) oder die Symmetrieachse (W3) der Schneidkante(n) (23) der inneren Wendeschneidplatte einen kleineren Winkel (α) mit der Schaftlängsachse (40) bildet als der Winkel (β) der Winkelhalbierenden oder Symmetrieachse der Schneidkante(n) der äußeren Wendeschneidplatte (20) mißt.

5. Bohrwerkzeug nach Anspruch 4, dadurch gekennzeichnet, daß der Neigungswinkel (α) der Winkelhalbierenden (W1, W2) oder der Symmetrieachse (W3) der Schneidkante(n) der inneren Wendeschneidplatte (10) Null ist.

6. Bohrwerkzeug nach einem der Ansprüche 1 bis 5, dadurch gekennzeichnet, daß die innere Wendeschneidplatte (10) zwei gleichlange Schneidkanten (11, 12) aufweist und die radial äußere Wendeschneidplatte eine Trochoiden-Wendeschneidplatte (20d) ist.

7. Bohrwerkzeug nach einem der Ansprüche 1 bis 6, dadurch gekennzeichnet, daß bei einem Wendeschneidplattendachwinkel (γ) von 160° der Neigungswinkel (α, β) maximal 8°, bei einem Wendeschneidplattendachwinkel (γ) von 156° der Neigungswinkel (α, β) maximal 12°, bei Wendeschneidplattendachwinkel (γ) von 145° der Neigungswinkel (α, β) maximal 15°, bei Wendeschneidplattendachwinkel (γ) von 125° der Neigungswinkel (α, β) maximal 20°, bei Wendeschneidplattendachwinkel (γ) von 115° der Neigungswinkel (α, β) maximal 25° und der Neigungswinkel (α, β) der Symmetrieachse (W3) einer Trochoiden-Wendeschneidplatte maximal 20° beträgt.

8. Bohrwerkzeug nach einem der Ansprüche 1 bis 7, dadurch gekennzeichnet, daß die Wendeschneidplatten (10, 20) unterschiedlich groß sind bzw. unterschiedlich lange Schneidkanten (11, 12; 21, 22; 23) aufweisen.

9. Bohrwerkzeug nach einem der Ansprüche 1 bis 8, dadurch gekennzeichnet, daß die wirksame Schneidkantenlänge der radial äußeren Wendeschneidplatte um 8 % bis 15 % größer ist als die wirksame Schneidkantenlänge der radial inneren Wendeschneidplatte.

10. Bohrwerkzeug nach einem der Ansprüche 1 bis 9, dadurch gekennzeichnet, daß die radial innere Wendeschneidplatte bis maximal 0,15 mm vor der oder den übrigen Wendeschneidplatte(n) vorsteht.

## Claims

1. Drilling tool for drilling bores in solid metal, with a shank and having at its frontal end of the shank several geometrically similar indexable inserts (10, 20) arranged at various radial distances and staggered with respect to each other by the same peripheral angle, their working areas overlapping and each of them having two cutting edges (11, 12; 21, 22) of equal length, each time two if these contiguous cutting edges inclined at an obtuse angle with respect to each other being simultaneously engaged, whereby the radially inner indexable insert (10) slightly extends beyond the drill axis (40) with one of its engaged cutting edges (11) at least one of the bisectors (W1, W2) of the two cutting edges (11, 12; 21, 22) of an indexable insert (10, 20) is inclined with respect to the longitudinal shank axis (40) by an angle (α, β), whereby the angle of inclination of one of the bisectors (W1, W2) is up to 25° and at least one of the bisectors runs at an angle which differs front zero with respect to another bisector,
characterized in that
the sum differing from zero of the residual force component (Fᵣ) resulting from all effectively engaged cutting edges and the corresponding sum of the horizontal force component (F_{H}), which preferably equals zero, form the general resultant (F_{RES}), which is oriented in the direction of the radially utmost indexable insert (20) or at an angle (δ) differing therefrom by maximum 45°.

2. Drilling tool for drilling bores in solid metal with a shank and having at its frontal end of the shank several geometrically similar indexable inserts (10, 20) arranged at various radial distances and staggered with respect to each other by the same peripheral angle, their working areas overlapping, whereby the radially inner indexable insert (10) slightly extends beyond the drill axis (40) with its engaged cutting edges (11),
characterized in that at least one of the indexable inerts has a trochoidal cutting edge (23), that their axis (axes) of symmetry (w3) and/or at least one of the bisectors (W1, W2) of the two equally long cutting edges (11, 12; 21, 22) of an indexable insert inclined towards each other at an obtuse angle are inclined by an angle (α, β) up to 25° with respect to the longitudinal shank axis (40), that at least one bisector or the axis of symmetry run at an angle differing from zero with respect to another bisector and/or axis of symmetry, so that the sum differing from zero of the radial force component (Fᵣ) resulting from all effectively engaged cutting edges and the corresponding sum of the horizontal force component (F_{H}), which preferably equals zero, form a general resultant (F_{RES}) oriented in the direction of the radially utmost indexable insert (20) or of an angle (α) differing therefrom by maximum 45°.

3. Drilling tool according to claim 1 or 2, characterized in that the obtuse apex angle (γ) of the equally long cutting edges lies between 115 and 160°, preferably at 160°, 156°, 145°, 125° or 115°.

4. Drilling tool according to one of the claims 1 to 3, characterized in that the bisecror (W1, W2) or the axis of symmetry (W3) of the cutting edge(s) (23) of the inner indexable insert form a smaller angle (α) with the longitudinal shank axis (40) than the angle (β) of the bisector or the axis of symmetry of the cutting edge(s) of the outer indexable insert (20).

5. Drilling tool according to claim 4, characterized in that the angle of inclination (α) of the bisector (W1, W2) or of the axis of symmetry (W3) of the cutting edge(s) of the inner indexable insert (10) is zero.

6. Drilling tool according to one of the claims 1 to 5, characterized in that the inner indexable insert (10) has to cutting edges (11, 12) of equal length and that the radially outer indexable insert is a trochoidal indexable insert (20d).

7. Drilling tool according to one of the claims 1 to 6, characterized in that at an apex angle (γ) of the indexable insert of 160°, the angle of inclination (α, β) is maximum 8°, when the apex angle γ = 156°, the angle of inclination (α, β) is maximum 12°, then the apex angle γ = 145°, the angle of inclination (α, β) is maximum 15°, when the apex angle γ = 125°, the angle of inclination (α, β) is maximum 20°, when the apex angle γ = 115°, the angle of inclination (α, β) is maximum 25° and the inclination angle (α, β) of the axis of symmetry (W3) of a trochoidal indexable insert is maximum 20°.

8. Drilling tool according to one of the claims 1 to 7, characterized in that the indexable inserts (10, 20) are of different size, respectively have cutting edges (11, 12; 21, 22; 23) of different length.

9. Drilling tool according to one of the claim 1 to 8, characterized in that the effective cutting edge length of the radially outer indexable insert is larger by 8 % to 15 % than the effective cutting edge length of the radially inner indexable insert.

10. Drilling tool according to one of the claims 1 to 9, characterized in that the radially inner indexable insert extends by maximum 0.15 mm beyond the rest of the indexable insert(s).

## Revendications

1. Outil de perçage pour forer des alésages dans un matériau métallique plein, comportant une tige et plusieurs plaquettes de coupe réversibles (10, 20) identiques géométriquement et disposées décalées, les unes par rapport aux autres, à des distances radiales différentes et du même angle suivant la périphérie, dont les zones de travail se recouvrent et dont chacune présente deux arêtes de coupe (11, 12; 21, 22) de longueur égale, voisines l'une de l'autre et inclinées l'une par rapport à l'autre en formant un angle obtus, et entrant simultanément en action, étant entendu que la plaquette de coupe réversible intérieure (10) avec son arête active (11) dépasse légèrement de l'axe (40) du foret et qu'au moins l'une des bissectrices (W1, W2) des deux arêtes de coupe (11, 12; 21, 22) est inclinée par rapport à l'axe longitudinal (40) de la tige suivant un angle (α, β), étant entendu que l'angle d'inclinaison de l'une des bissectrices (W1, W2) peut aller jusqu'à 25°, et qu'au moins l'une des bissectrices a une direction faisant un angle différent de zéro par rapport à une autre bissectrice,
caractérisé en ce que
la somme, différente de zéro, de la composante radiale (Fr) des forces, résultant de toutes les arêtes de coupe actives se trouvant en position active et la somme correspondante des composantes (FH) horizontales des forces, qui, de préférence, est nulle, donne une résultante totale (FRES), agissant sur les arêtes de coupe, qui est dirigée dans la direction de la plaquette de coupe réversible (20) située le plus à l'extérieur, ou en formant un angle maximal (δ) de 45° avec elle.

2. Outil de perçage pour des alésages dans un matériau métallique plein, comportant une tige et plusieurs plaquettes de coupe réversibles (10, 20) identiques géométriquement et disposées décalées, les unes par rapport aux autres, à des distances radiales différentes et de même angle suivant la périphérie, dont les zones de travail se recouvrent, étant entendu que la plaquette de coupe réversible intérieure radialement (10), avec son arête de coupe se trouvant en position active, dépasse légèrement de l'axe du foret (40), caractérisé en ce qu'au moins l'une des plaquettes de coupe réversibles présente une arête de coupe en forme de cycloïde (23), en ce que leur, ou leurs axes de symétrie, (W3), et/ou au moins l'une des bissectrices (W1, W2) des deux arêtes de coupe (11, 12; 21, 22), de même longueur, inclinées d'un angle obtus l'une vers l'autre, d'une plaquette de coupe réversible est inclinée d'un angle (α, β) allant jusqu'à 25° par rapport à l'axe longitudinal (40) de la tige, en ce qu'au moins l'une des bissectrices ou l'axe de symétrie a une direction formant un angle différent de zéro par rapport à une autre des bissectrices et/ou par rapport à l'axe de symétrie, de telle façon que la somme, différente de zéro, de la composante radiale (Fr) des forces, résultant de toutes les arêtes de coupe actives se trouvant en action et la somme correspondante des composantes horizontales (FH) des forces, qui, de préférence, est nulle, donne une résultante globale (FRES), agissant sur les arêtes de coupe, qui est dirigée dans la direction de la plaquette de coupe réversible (20) située le plus à l'extérieur, ou en formant un angle (δ) maximal de 45° avec elle.

3. Outil de perçage suivant la revendication 1 ou la revendication 2, caractérisé en ce que l'angle au sommet obtus (γ) des arêtes de coupe de même longueur est compris entre 115 et 160°, et est, de préférence, de 160°, 156°, 145°, 125° ou 115°.

4. Outil de perçage suivant l'une quelconque des revendications 1 à 3, caractérisé en ce que les bissectrices (W1, W2), ou l'axe de symétrie (W3) de l'arête de coupe, ou des arêtes de coupe, (23) de la plaquette de coupe réversible intérieure forme, avec l'axe longitudinal (40) de la tige, un angle (α) plus petit que l'angle (β) des bissectrices ou de l'axe de symétrie de la ou des arêtes de coupe de la plaquette de coupe réversible extérieure (20).

5. Outil de perçage suivant la revendication 4, caractérisé en ce que l'angle d'inclinaison (α) des bissectrices (W1, W2) ou de l'axe de symétrie (W3) de l'arête de coupe, ou des arêtes de coupe, de la plaquette de coupe réversible intérieure (10) est égal à zéro.

6. Outil de perçage suivant l'une quelconque des revendications 1 à 5, caractérisé en ce que la plaquette de coupe réversible intérieure (10) présente deux arêtes de coupe (11, 12) de même longueur et que la plaquette de coupe réversible extérieure radialement est une plaquette de coupe réversible en forme de cycloïde (trochoïde) (20d).

7. Outil de perçage suivant l'une quelconque des revendications 1 à 6, caractérisé en ce que, dans le cas d'un angle au sommet (γ) de la plaquette de coupe réversible de 160°, l'angle d'inclinaison (α, β) est au maximum de 8°, dans le cas d'un angle au sommet (γ) de la plaquette de coupe réversible de 156°, l'angle d'inclinaison (α, β) est au maximum de 12°, dans le cas d'un angle au sommet (γ) de la plaquette de coupe réversible de 145°, l'angle d'inclinaison (α, β) est au maximum de 15°, dans le cas d'un angle au sommet (γ) de la plaquette de coupe réversible de 125°, l'angle d'inclinaison (α, β) est au maximum de 20°, dans le cas d'un angle au sommet (γ) de la plaquette de coupe réversible de 115°, l'angle d'inclinaison (α, β) est au maximum de 25° et l'angle d'inclinaison (α, β) de l'axe de symétrie (W3) d'une plaquette de coupe réversible en forme de cycloïde est au maximum de 20°.

8. Outil de perçage suivant l'une quelconque des revendications 1 à 7, caractérisé en ce que les plaquettes de coupe réversibles (10, 20) ont des dimensions différentes et présentent des arêtes de coupe (11, 12; 21, 22; 23) de longueur différente.

9. Outil de perçage suivant l'une quelconque des revendications 1 à 8, caractérisé en ce que la longueur active des arêtes de coupe de la plaquette de coupe réversible extérieure radialement est de 8 % à 15 % plus grande que la longueur active des arêtes de coupe de la plaquette de coupe réversible intérieure radialement.

10. Outil de perçage suivant l'une quelconque des revendications 1 à 9, caractérisé en ce que la plaquette de coupe réversible intérieure radialement dépasse au maximum de 0,15 mm en avant de la ou des autres plaquettes de coupe réversibles.
